# EUROPEAN PATENT SPECIFICATION

(11) **EP 2 096 968 B1**
(45) Date of publication and mention of the grant of the patent: **26.06.2013**
(21) Application number: 07860930.2
(22) Date of filing: 27.12.2007
(51) Int. Cl.: A47J 37/12

(54) **FIRE PREVENTION DEVICE**
BRANDVERHÜTUNGSVORRICHTUNG
DISPOSITIF DE PROTECTION CONTRE LES INCENDIES

(30) Priority: 29.12.2006 NO 20066073
(43) Date of publication of application: 09.09.2009
(73) Proprietor: Amkrov DA, 1605 Fredrikstad (NO)
(72) Inventor: AMUNDSEN, Carl, Henrik, 1605 Fredrikstad (NO); KRISTIANSEN, Thor, Arne, 1661 Rolvsøy (NO)
(74) Representative: Fluge, Per Roald
(86) International application number: PCT/NO2007/000465
(87) International publication number: WO 2008/082311

(56) References cited:
- EP-A1- 0 819 400
- GB-A- 2 306 878
- JP-A- 2000 014 570
- US-A- 5 809 870
- US-B1- 6 186 241

## Description

This invention pertains to a fire prevention device for containers with oils being heated. Specifically the invention pertains to a fire prevention device for a deep fryer for use in kitchens.

### Introduction.

The ignition of fluids being heated within containers is a commonly occurring cause of fires and fire initiations and it is of major economic importance to prevent such fires and fire initiations. Most devices in existence on the market today are arranged for extinguishing fires after they have begun, however such fire extinguishing is associated with major difficulties, in particular with respect to oil fires. Special fire extinguishing methods must be used wherein the methods often comprise the use of toxic or environmentally harmful compounds. When deep frying foodstuffs in restaurant kitchens there is daily use of large amounts of heated oils. If a fire situation should arise whilst deep frying, these special fire extinguishing methods must be used whereupon the kitchen must be cleaned causing operational interruptions of potentially long durations. The present invention seeks to overcome this situation by proposing a device which shall forestall, and thereby, prevent fires from initiating at all.

### Background art.

There are in existence methods for the measurement of temperatures and the subsequent disconnection of heat input to kettles upon fire initiations.

GB2407485 describes a method for the disconnection of heating equipment for food preparation using hot oils or fats and the possible implementation of fire extinguishing measures after a fire has been discovered.

US4520717 describes a food frying device, comprising amongst other things a safety device arranged for disconnecting the power to a heating apparatus after a fire has been discovered. The system comprises a sensor arranged in the lower portion of the apparatus monitoring the temperature in the deep-frying apparatus. A fire extinguishing device is arranged in the upper portion of the apparatus.

US5839355 describes an electrical thermostat regulating the temperature of the heat exchanging apparatus such that the temperature does not rise to dangerous levels.

US6186241 describes a method and a device for automatic fire extinguishing whilst deep-frying. A fire sensor is used for controlling the temperature level wherein upon risk of fire an outlet valve is opened.

None of the above known solutions present a passive fire prevention device as suggested by the present invention. Furthermore, the solutions being based on extinguishing an already occurring fire they are not very well-adapted for use in for instance kitchens, as the extinguishing of the fires must necessarily result in service interruptions as the kitchen must be cleaned. Additionally it is not given that an extinguishing is either simple or effective as oil fires are notoriously difficult to extinguish. Many of the solutions are furthermore based on sensor solutions using temperature measurements prior to subsequent action, and it seems clear that sensors may fail for various reasons. Many of the solutions of the background art are furthermore based on acting after the fire initiation has taken place, which in most circumstances is disadvantageous as the extinction of oil fires is difficult and in that the fire and subsequent fire-fighting work can entail dangers both for the kitchen personnel, the guests, fire workers or others.

### Short summary of the invention

The present invention seeks to overcome the abovementioned deficiencies of the background art and comprises a fire prevention device for a deep fryer wherein the deep fryer contains a ignitable oil, wherein the oil is arranged for receiving heat energy from a heating unit for the increase or maintenance of the temperature in the oil, wherein the oil is arranged for the heat treatment of foodstuffs, wherein the fire prevention device comprises:
- at least one fusible bead arranged for melting at a melting temperature Tₛ lower than the ignition temperature Tₐ of the oil,
- wherein the fusible beads are arranged for being in temperature communication with the oil,
- wherein the fusible beads are in direct or indirect communication with a shutting unit,
- wherein the shutting unit is arranged for opening the canal once the fusible bead is completely or partially melted,
such that the oil in the deep fryer is evacuated through the thus opened canal if the temperature in the oil rises above the temperature Tₛ

Further features of the invention are given in the attached dependent claims.

### Figure captions

The figures are solely intended to show exemplary embodiments and shall in no way be construed as being limiting with respect to the invention.

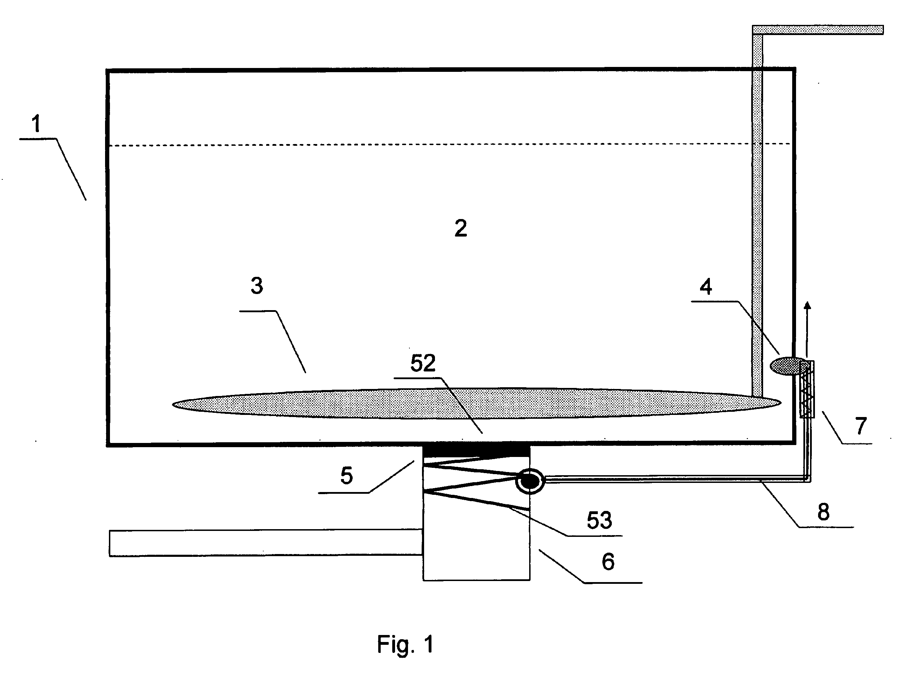

Figure 1 describes a preferred embodiment of the invention wherein the fusible bead (4) is in temperature communication with the oil (2). The shutting unit (5) is in closed position. In this preferred embodiment the fusible bead is connected to a spring (7) wherein the spring (7) is connected to a wire (8). The wire (8) is connected to a second spring (53) being taut and connected to a plug (52) blocking the canal (6) during ordinary operation.

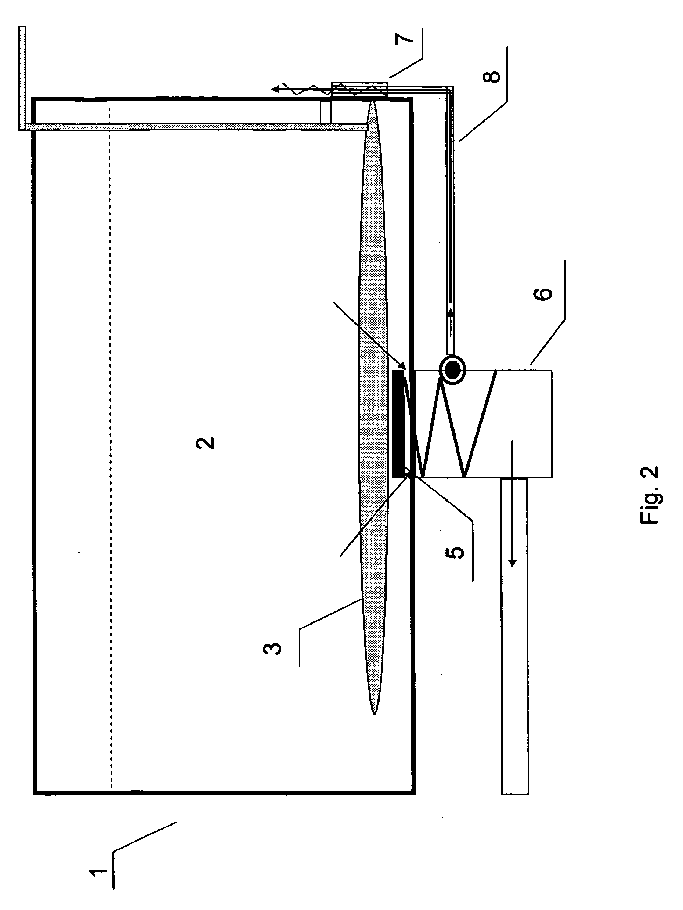

Figure 2 shows a situation wherein the fusible bead (4) has melted. The spring (7) has thus been tripped, whereupon the wire (8) has been moved in the motion direction of the spring (7). The wire has consequently tripped the second spring (53) thus moving the plug (52) and opened the canal (6) in or near the deep-fryers (1) bottom plate. The oil (2) will thus be evacuated through the canal (6).

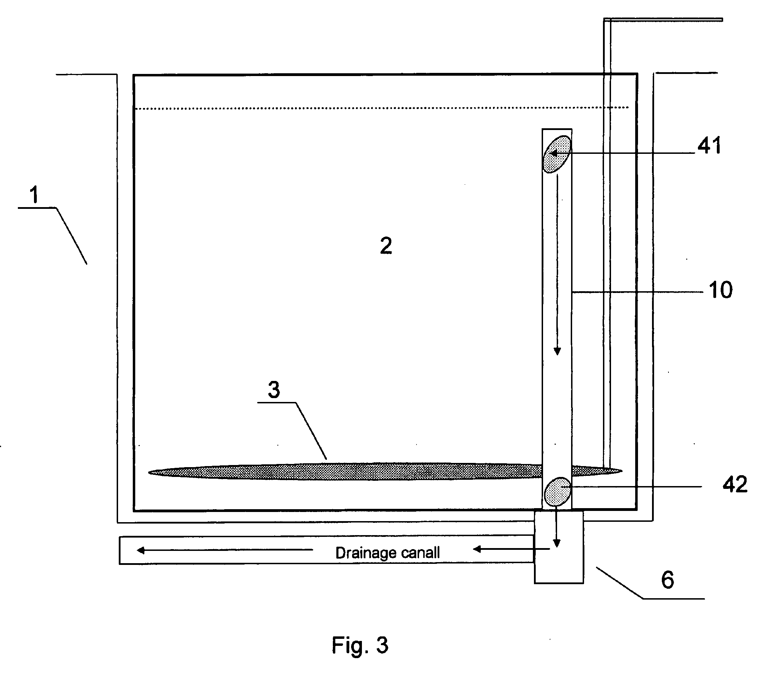

Figure 3 shows a second embodiment of the invention wherein a pipe (10) is arranged directly in the deep-fryer (1) and wherein two fusible beads (41, 42) are arranged within the pipe (10). The second fusible bead (42) is further arranged for acting as the shutting unit (5).

### Short description of embodiments of the invention

The fire prevention device according to the invention will in the following paragraphs be described with reference to the attached figures. It should be noted that solely exemplary embodiments are described below and that any embodiment of the invention pertaining to the same inventive concept should also be encompassed by the invention.

The invention may in an embodiment of the invention be defined as comprising a passive fire prevention device to prevent fire initiations.

The invention pertains to a fire prevention device for a deep fryer (1) in which the deep fryer contains an ignitable oil (2). Such deep fryers (1) with oils (2) are in common usage in kitchens or commercial kitchens and are used for instance for the treatment of foodstuffs such as donuts, french fries or other potato products, or possibly other food products for deep frying. In a common embodiment of a deep fryer (2) the heating element (3) is also integrated within the deep fryer (2), however the deep fryer (2) may also receive heat or heat energy from external heat sources or elements (3) such as hot plates, gas burners or the like.

The fire prevention device comprises at least one fusible bead (4) being arranged for melting at a temperature Tₛ being lower than the ignition temperature Tₐ of the oil (2) in the deep fryer (1). The fusible bead material should be inert with respect to the oil (2), but in those instances wherein the fusible bead is not in contact with the oil (2) the material may be freely chosen according to melt temperature considerations. The melt temperature Tₛ for the fusible bead should be chosen considering the type of oil to be used in the relevant application. As the ignition temperature for oils (2) varies according to which oil (2) is used, the choice of material for the fusible bead should also be varied. Examples of materials for fusible beads (2) that may be considered are tin and bismuth having respective melt temperatures of approx. 232°C and 271 °C. Other examples may include thermoplastic materials or polymers such as polytetrafluoroethylene (Teflon) wherein the melting point of the fusible bead may be adjusted according to need, for instance by varying the polymer chain length of the polymer in question. The melting temperature Tₛ of the fusible bead should be somewhat lower than the oils (2) ignition temperature Tₐ due to safety concerns to be described below.

Below is to be found a table showing approximate temperature characteristics for a common deep frying oil. Other oils may evidently have different temperature characteristics than those given in the table below and these should also be considered as being part of the invention. It is clearly shown in the table that there is a quite large temperature span for this particular oil (2) wherein the fire prevention device may function. The temperature range between approximately 260°C and approximately 300°C is sufficiently broad such that an adequate fusible bead material may be chosen and such that the fire prevention device may be triggered before smoke development occurs.

| **Approximate temperature °C** | **Characteristics of deep frying oil** |
|---|---|
| 150-180 | Common working temperature |
| 200 | Highest working temperature |
| 260-290 | Fire prevention device triggered |
| 300 | Smoke development |
| 370 | Oil self-ignites |

The fusible bead (4) is in an embodiment of the invention in temperature communication with the oil such that the temperature conditions in the fusible bead are generally the same as those within the oil. As the oil temperature may vary along the entire height of the deep fryer, the fusible bead should be in temperature communication with the portion of the oil (2) having the highest temperature or that is most susceptible to fire ignition. In most instances it would be advantageous to arrange the fusible bead (4) such that it is in temperature communication with the upper layer of oil (2) such that the fusible bead (4) is subjected to the same temperature as the upper oil layer as this will be the layer most susceptible for ignition.

The fusible bead (4) is arranged in communication with a shutting unit (5) for instance a plug or valve arranged for shutting a canal (6) in or near the deep fryers (1) lower surface. The shutting unit (5) is normally closed such that the oil (2) can not pour out of the fryer (1). The shutting unit (5) is further arranged for opening the canal (6) as the fusible bead (4) becomes partially or entirely melted which will occur once the temperature in the fusible bead (4) is equal to or lower than the melting temperature Tₛ of the fusible bead (4).

Once the canal (6) is opened the oil (2) will run out through the canal (6) and the fryer (1) will be generally emptied of oil (2). As the melting temperature Tₛ is lower than the oils (2) ignition temperature Tₐ this will result in the oil (2) in the fryer (1) being evacuated before an oil fire may arise and one will thus avoid having to implement fire extinguishing measures. As mentioned the implementation of fire extinguishing measures usually results in that the location wherein the fryer (1) is arranged becomes polluted with extinguishing materials and will thus have to be cleaned causing a subsequent operational halt in the kitchen. As oil fires are notoriously difficult and dangerous to extinguish, there is no guarantee of the fire extinguishing measures succeeding, whereupon a larger fire may ensue. Such fires may further result in the complete destruction of not only the kitchen wherein the deep fryer is arranged but furthermore to the destruction or damaging of surrounding area.

It should be evident that the melting temperature of the fusible beads (4) should not be too low with respect to the oil (2) being used, as this could easily result in unnecessary evacuation of the oil (2) in the fryer even at normal operating temperatures within the fryer (1). Likewise, the melting temperature Tₛ of the fusible beads (4) should not be too close to the oils (2) ignition temperature as this will not provide adequate fire safety. The choice of fusible bead material should thus be tailored carefully with respect to the desired oil (2) to be used.

Even though the above description describes a deep fryer (1) as an example of a container, any other kind of container being used as a container for oil being heated, and wherein there is danger of the oil overheating may be used.

In an embodiment of the invention the fusible bead (4) is further arranged for being connected to an energy disconnection device in connection with the heating unit (3), wherein the energy disconnection device is arranged for cutting the energy supply to the heating unit (3) once the fusible bead (4) is completely or partially melted. In this embodiment of the invention the necessity of shutting off the energy supply once the oil (2) is evacuated is maintained, such that possible remaining oil (2) in the deep fryer (1) may not be ignited by the heating unit (3). The energy disconnection device may have any constitution adapted for the purpose, such as for instance a relay controlled switch in connection with the fusible bead (4), a fuse wherein the fusible bead (4) is an integral part of the energy disconnection device, a device wherein a wire connected to the fusible bead (4) cuts the energy support to the heating unit (3) once the fusible bead (4) is completely or partially melted.

In an embodiment of the invention the fusible bead (4) is a part of a mechanical fire prevention device for opening the shutting element (4), wherein the fusible bead (4) is connected to a first taut spring (7), wherein the spring (7) is connected to at least one wire (8) connected to the shutting unit (5), wherein the wire (8) upon the fusible bead being completely or partially melted, releases the spring (7) and thus acts to move the shutting unit (5) for the opening of the canal (6). A system such as this is shown in figs. 1 and 2 wherein fig 1. shows the system while the fusible bead (4) is intact, whilst fig. 2. shows the release and subsequent movement of various elements after the fusible bead (4) has melted.

Even though the fusible bead (4) is here shown being in direct contact with the oil (2) this is solely illustrative, and the fusible bead (4) merely needs to be in effective temperature communication with the oil (2) for the fire prevention device to function according to its purpose. There may for instance be arranged intermediate systems for the temperature communication between the oil (2) and the fusible bead (4), wherein the fusible bead (4) is arranged a certain distance away from the deep fryer (1) such that the heat radiation of the fryer (1) does not directly influence the fusible bead (4). Such temperature communication systems are well known in the art and are considered to be part of the present description.

In an embodiment of the invention the shutting unit (5) comprises a plug (52) wherein the plug (52) is arranged for shutting the canal (6), wherein the plug (52) is connected to a second spring (53) arranged for being held taut whilst the plug (6) closes the canal (6), wherein the fusible bead (4) is arranged for being connected to the second spring (53) and wherein the second spring (53) is arranged for being released once the fusible bead (4) is completely or partially melted such that the plug (52) is moved. A system such as this is shown in fig. 1.

In an embodiment of the invention the shutting unit (5) is a valve wherein the valve is arranged for being switched from a closed position to an open position once the fusible bead (4) is completely or partially melted. Such valve systems may have various constitutions according to application.

To avoid personal or material injuries which may occur as the oil (2) is evacuated from the deep fryer (1) a tank may advantageously be arranged in communication with the canal (6) such that the oil (2) as it is evacuated from the deep fryer (1) is funnelled to the tank. The tank with the oil (2) may later be emptied once the oil has cooled sufficiently such that it does not represent any danger. If necessary the tank may be furnished with a thermometer for monitoring the oils (2) temperature in the tank. The tank may be used for other purposes such as receipt of the oil (2) upon evacuation from the deep fryer (1) and further to transportation of the oil (2) to a depot or storage for recycling.

In an embodiment of the invention the fusible bead (4) is arranged directly in contact with the oil (2). It is evident that the fusible bead (4) in this embodiment should consist of a material which should not be dissolved in or by the oil, or release harmful chemicals during the course of normal usage of the deep fryer (1). To prevent the bead (4) from potentially releasing chemicals in the oil, the fusible bead (4) may be arranged in a pipe (10) wherein the pipe (10) is arranged for being fastened to the deep fryer (1).

The fastening of the pipe (10) in the deep fryer (1) allows an embodiment of the invention wherein a first fusible bead (41) is arranged in the pipe close to the oils presumed upper layer in the deep fryer (1) and such arranged that once the first fusible bead (41) is completely or partially melted as the temperature in the oil rises above Tₛ the oil will run down the pipe and come into contact with a second fusible bead (42). The second fusible bead (42) is arranged for melting upon contact with the oil (2) if the oil has a higher temperature than the melting temperature of the second fusible bead (42) T_{S2}, such that this will also melt, whereafter the complete or partial melting of the second fusible bead (42) the shutting unit (5) will open. One of the purposes of such a double fusible bead solution is that the lower fusible bead (42) may act as the shutting unit (5) itself. Thus there is presented a fire prevention device without any movable parts, solely comprising passive components. The lower fusible bead will not be subjected to the same temperature loads as the upper fusible bead (41) as there will usually be a large temperature gradient in the fryer. This embodiment of the invention is shown in Fig. 3.

## Claims

1. A fire prevention device for a deep fryer (1) wherein the deep fryer (1) contains ignitable oil (2), wherein the oil (2) is arranged for receiving heat energy from a heating unit (3) for the increase or maintenance of the temperature in the oil (2), wherein the oil (2) is arranged for heat treatment of foodstuffs, wherein the fire prevention device comprises:
- at least one fusible bead (4)
- wherein the fusible bead (4) is in communication with a shutting unit (5),
- wherein the shutting unit (5) is arranged for shutting a canal (6) arranged in or near a bottom surface of the deep fryer (1),
- wherein the shutting unit (5) is arranged for opening the,canal (6) upon the fusible bead (4) being completely or partially melted, **characterised in that** the fusible bead (4) is arranged for melting at a melting temperature Tₛ lower than the ignition temperature Tₐ of the oil (2), -wherein the fusible bead (4) is arranged for being in temperature communication with the oil (2), such that the oil (2) in the deep fryer (1) is evacuated through the thus opened canal (6) if the oil (2) temperature is higher than the temperature Tₛ.

2. The fire prevention device according to claim 1, wherein the at least one fusible bead (4) is connected to an energy disconnection device in communication with the heating unit (3), wherein the energy disconnection device is arranged for cutting the energy supply to the heating unit (3) upon the fusible bead (4) being completely or partially melted.

3. The fire prevention device according to claim 1, wherein the at least one fusible bead (4) is connected to at least one taut elastic spring (7), wherein the spring (7) is connected to at least one wire (8) connected to the shutting unit (5), wherein the wire (8) upon the complete or partial melting of the fusible bead (4) releases the spring (7) and such contributes to moving the shutting unit (5) for the opening of the channel (6).

4. The fire prevention device according to claim 1, wherein the shutting unit (5) comprises a valve, wherein the valve is arranged for being switched from a closed position to an open position upon the fusible bead (4) being completely or partially melted.

5. The fire prevention device according to claim 1, wherein the shutting unit (5) comprises a plug (52), wherein the plug (52) is arranged for blocking the canal (6), wherein the plug (52) is connected to a second spring (53) arranged for being held taut whilst the plug (6) blocks the canal, wherein the fusible bead (4) is arranged for being connected to the second spring (53) and wherein the second spring (53) is arranged for being sprung once the fusible bead (4) is completely or partially melted such that the plug (52) is moved.

6. The fire prevention device according to claim 1, wherein a tank is arranged in communication with the aperture or canal (6) in the deep fryer (1), wherein the tank is arranged for the collection of the evacuated oil (2) from the deep fryer (1).

7. The fire prevention device according to claim 1 or 6 wherein a first fusible bead (41) is arranged close to the upper layer of the oil (2) in the deep fryer (1).

8. The fire prevention device according to claim 1, wherein a first fusible bead (41) is arranged in a pipe (10), wherein the pipe (10) is arranged in the deep fryer (1) in direct contact with the oil (2).

9. The fire prevention device according to claims 1 or 8 wherein the first fusible bead (4, 41) is in direct contact with oil (2).

10. The fire prevention device according to claim 9, wherein a second fusible bead (42) is arranged close to the deep fryers (1) bottom surface, wherein upon the complete or partial melting of the first fusible bead (41) the oil (2) runs down through the pipe and comes into contact with the second fusible bead (42), wherein the second fusible bead (42) is arranged for melting upon contact with the oil (2) whereupon the complete or partial melting of the second fusible bead (42) the shutting unit (5) is opened.

11. The fire prevention device according to claims 1 or 10, wherein the fusible bead (4, 41, 42) constitutes the shutting unit (5).

## Patentansprüche

1. Feuerschutzvorrichtung für eine Friteuse (1), wobei die Friteuse (1) entzündbares Öl (2) enthält, wobei das Öl (2) angeordnet ist, um Wärmeenergie von einer Heizeinheit (3) zu empfangen, um die Temperatur des Öls (2) zu erhöhen oder beizubehalten, wobei das Öl (2) angeordnet ist, um Nahrungsmittel einer Wärmebehandlung zu unterziehen, wobei die Feuerschutzvorrichtung Folgendes umfasst:
- mindestens eine schmelzbare Kugel (4)
- wobei die schmelzbare Kugel (4) mit einer Verschlusseinheit (5) in Kommunikation ist,
- wobei die Verschlusseinheit (5) angeordnet ist, um einen Kanal (6) zu verschließen, der in oder neben der unteren Fläche der Friteuse (1) angeordnet ist,
- wobei die Verschlusseinheit (5) angeordnet ist, um den Kanal (6) zu öffnen, nachdem die schmelzbare Kugel (4) vollständig oder teilweise geschmolzen ist, **dadurch gekennzeichnet, dass** die schmelzbare Kugel (4) angeordnet ist, um bei einer Schmelztemperatur Tₛ zu schmelzen, die geringer als die Zündtemperatur Tₐ des Öls (2) ist,
- wobei die schmelzbare Kugel (4) angeordnet ist, um in Temperaturkommunikation mit dem Öl (2) zu stehen,
- so dass das Öl (2) in der Friteuse (1) durch den so geöffneten Kanal (6) evakuiert wird, wenn die Öltemperatur (2) höher als die Temperatur Tₐ ist.

2. Feuerschutzvorrichtung nach Anspruch 1, wobei die mindestens eine schmelzbare Kugel (4) mit einer Energie-Abschaltvorrichtung verbunden ist, die mit der Heizeinheit (3) in Kommunikation ist, wobei die Energie-Abschaltvorrichtung angeordnet ist, um die Energieversorgung an die Heizeinheit (3) zu unterbrechen, nachdem die schmelzbare Kugel (4) vollständig oder teilweise geschmolzen ist.

3. Feuerschutzvorrichtung nach Anspruch 1, wobei die mindestens eine schmelzbare Kugel (4) mit mindestens einer elastischen Spannfeder (7) verbunden ist, wobei die Feder (7) mit mindestens einem Draht (8) verbunden ist, der mit der Verschlusseinheit (5) verbunden ist, wobei der Draht (8) beim vollständigen oder teilweisen Schmelzen der schmelzbaren Kugel (4) die Feder (7) freigibt und somit zur Bewegung der Verschlusseinheit (5) zur Öffnung des Kanals (6) beiträgt.

4. Feuerschutzvorrichtung nach Anspruch 1, wobei die Verschlusseinheit (5) ein Ventil umfasst, wobei das Ventil angeordnet ist, um von einer geschlossenen Position in eine geöffnete Position geschaltet zu werden, nachdem die schmelzbare Kugel (4) vollständig oder teilweise geschmolzen ist.

5. Feuerschutzvorrichtung nach Anspruch 1, wobei die Verschlusseinheit (5) einen Stopfen (52) umfasst, wobei der Stopfen (52) angeordnet ist, um den Kanal (6) zu blockieren, wobei der Stopfen (52) mit einer zweiten Feder (53) verbunden ist, die angeordnet ist, um gespannt gehalten zu werden, während der Stopfen (52) den Kanal blockiert, wobei die schmelzbare Kugel (4) angeordnet ist, um mit der zweiten Feder (53) verbunden zu werden, und wobei die zweite Feder (53) angeordnet ist, um gefedert zu werden, nachdem die schmelzbare Kugel (4) vollständig oder teilweise geschmolzen ist, so dass der Stopfen (52) bewegt wird.

6. Feuerschutzvorrichtung nach Anspruch 1, wobei ein Behälter in Kommunikation mit der Öffnung oder dem Kanal (6) in der Friteuse (1) angeordnet ist, wobei der Behälter angeordnet ist, um das evakuierte Öl (2) aus der Friteuse (1) zu sammeln.

7. Feuerschutzvorrichtung nach Anspruch 1 oder 6, wobei die schmelzbare Kugel (41) nahe der oberen Schicht des Öls (2) in der Frisöse (1) angeordnet ist.

8. Feuerschutzvorrichtung nach Anspruch 1, wobei die schmelzbare Kugel (41) in einem Rohr (10) angeordnet ist, wobei das Rohr (10) in der Friteuse (1) in direktem Kontakt mit dem Öl (2) angeordnet ist.

9. Feuerschutzvorrichtung nach Anspruch 1 oder 8, wobei die erste schmelzbare Kugel (4, 41) in direktem Kontakt mit dem Öl (2) steht.

10. Feuerschutzvorrichtung nach Anspruch 9, wobei eine zweite schmelzbare Kugel (42) nahe an der unteren Fläche der Friteuse (1) angeordnet ist, wobei nach dem vollständigen oder teilweisen Schmelzen der ersten schmelzbaren Kugel (41) das Öl (2) durch das Rohr nach unten rinnt und mit der zweiten schmelzbaren Kugel (42) in Kontakt kommt, wobei die zweite schmelzbare Kugel (42) angeordnet ist, um beim Kontakt mit dem Öl (2) zu schmelzen, wobei beim vollständigen oder teilweisen Schmelzen der zweiten schmelzbaren Kugel (42) die Verschlusseinheit (5) geöffnet wird.

11. Feuerschutzvorrichtung nach Anspruch 1 oder 10, wobei die schmelzbare Kugel (4, 41, 42) die Verschlusseinheit (5) darstellt.

## Revendications

1. Dispositif de protection contre les incendies pour une friteuse (1), la friteuse (1) contenant de l'huile inflammable (2), l'huile (2) étant disposée pour recevoir e l'énergie thermique d'une unité de chauffage (3) pour l'augmentation ou le maintien de la température dans l'huile (2), l'huile (2) étant disposée pour traiter thermiquement des denrées alimentaires, le dispositif de protection contre les incendies comprenant :
- au moins une bille fusible (4),
- la bille fusible (4) étant en communication avec une unité de fermeture (5),
- l'unité de fermeture (5) étant agencée pour fermer un canal (6) agencé dans ou à proximité d'une surface inférieure de la friteuse (1),
- l'unité de fermeture (5) étant agencée pour ouvrir le canal (6) lorsque la bille fusible (4) est complètement ou partiellement fondue, **caractérisé par le fait que** la bille fusible (4) est agencée pour fondre à une température de fusion Tₛ inférieure à la température d'inflammation Tₐ de l'huile (2),
- la bille fusible (4) étant agencée pour être en communication thermique avec l'huile (2),
de telle sorte que l'huile (2) dans la friteuse (1) est évacuée à travers le canal (6) ainsi ouvert si la température de l'huile (2) est supérieure à la température Tₛ.

2. Dispositif de protection contre les incendies selon la revendication 1, dans lequel la au moins une bille fusible (4) est reliée à un dispositif de déconnexion d'énergie en communication avec l'unité de chauffage (3), le dispositif de déconnexion d'énergie étant agencé pour couper l'alimentation en énergie de l'unité de chauffage (3) lorsque la bille fusible (4) est complètement ou partiellement fondue.

3. Dispositif de protection contre les incendies selon la revendication 1, dans lequel la au moins une bille fusible (4) est reliée à au moins un ressort élastique tendu (7), le ressort (7) étant relié à au moins un fil (8) relié à l'unité de fermeture (5), le fil (8), lors de la fusion complète ou partielle de la bille fusible (4), libérant le ressort (7) et contribuant ainsi à déplacer l'unité de fermeture (5) pour l'ouverture du canal (6).

4. Dispositif de protection contre les incendies selon la revendication 1, dans lequel l'unité de fermeture (5) comprend un clapet, le clapet étant agencé pour être amené à passer d'une position fermée à une position ouverte lorsque la bille fusible (4) est complètement ou partiellement fondue.

5. Dispositif de protection contre les incendies selon la revendication 1, dans lequel l'unité de fermeture (5) comprend un bouchon (52), le bouchon (52) étant agencé pour bloquer le canal (6), le bouchon (52) étant relié à un second ressort (53) agencé pour être maintenu tendu alors que le bouchon (6) bloque le canal, la bille fusible (4) étant agencée pour être reliée au second ressort (53) et le second ressort (53) étant agencé pour être libéré une fois que la bille fusible (4) est complètement ou partiellement fondue de telle sorte que le bouchon (52) est déplacé.

6. Dispositif de protection contre les incendies selon la revendication 1, dans lequel un réservoir est agencé en communication avec l'ouverture ou le canal (6) dans la friteuse (1), le réservoir étant agencé pour la collecte de l'huile évacuée (2) de la friteuse (1).

7. Dispositif de protection contre les incendies selon la revendication 1 ou 6, dans lequel une première bille fusible (41) est agencée à proximité de la couche supérieure de l'huile (2) dans la friteuse (1).

8. Dispositif de protection contre les incendies selon la revendication 1, dans lequel une première bille fusible (41) est agencée dans un tuyau (10), le tuyau (10) étant agencé dans la friteuse (1) en contact direct avec l'huile (2).

9. Dispositif de protection contre les incendies selon les revendications 1 ou 8, dans lequel la première bille fusible (4, 41) est en contact direct avec de l'huile (2).

10. Dispositif de protection contre les incendies selon la revendication 9, dans lequel une seconde bille fusible (42) est agencée à proximité de la surface inférieure de friteuses (1), l'huile (2) s'écoulant à travers le tuyau et venant en contact avec la seconde bille fusible (42) lors de la fusion complète ou partielle de la première bille fusible (41), la seconde bille fusible (42) étant agencée pour fondre lors du contact avec l'huile (2), l'unité de fermeture (5) étant ouverte lors de la fusion complète ou partielle de la seconde bille fusible (42).

11. Dispositif de protection contre les incendies selon les revendications 1 ou 10, dans lequel la bille fusible (4, 41, 42) constitue l'unité de fermeture (5).
